# EUROPEAN PATENT APPLICATION

(11) **EP 4 485 312 A1**
(43) Date of publication of application: **01.01.2025**
(21) Application number: 24183724.4
(22) Date of filing: 21.06.2024
(51) Int. Cl.: G06Q 10/10, G06Q 10/105

(54) **INFORMATION MANAGEMENT APPARATUS, INFORMATION MANAGEMENT METHOD, AND PROGRAM**

(30) Priority: 29.06.2023 JP 2023106610
(71) Applicant: Casio Computer Co., Ltd., Tokyo 151-8543 (JP)
(72) Inventor: Hata, Shoji, Hamura-shi, Tokyo, 205-8555 (JP)
(74) Representative: Grünecker Patent- und Rechtsanwälte PartG mbB

(57) **Abstract**

Disclosed is an information management apparatus, including a processor that links first identification information to second identification information, the first identification information being set corresponding to a user enrolled in a specific educational institution and associated with a first storage area for storing learning information, the second identification information being set corresponding to the user and associated with a second storage area storing learning information of the user in a past and content owned by the user. In a case where the processor links the first identification information to the second identification information, the processor causes the first storage area and the second storage area to share learning information stored in each of the first storage area and the second storage area.

## Description

### TECHNICAL FIELD

The present disclosure relates to an information management apparatus, an information management method, and a program.

### DESCRIPTION OF RELATED ART

Learning support systems in which a teacher manages learning information of students using a computer network system have been known. For example, JP 2016-126100A discloses a learning management system that provides learning information to a user (student) terminal and obtains a learning state based on a student's answer in an e-learning system.

### SUMMARY OF THE INVENTION

However, the above learning management system does not manage with an assumption that a student may change schools (move out of one school and move into another).

Objects of the present invention include managing learning information with the assumption that a user may also change schools.

To achieve at least one of the abovementioned objects, according to an aspect of the present invention, an information management apparatus comprises a processor that links first identification information to second identification information, the first identification information being set corresponding to a user enrolled in a specific educational institution and associated with a first storage area for storing learning information, the second identification information being set corresponding to the user and associated with a second storage area storing learning information of the user in a past and content owned by the user, wherein in a case where the processor links the first identification information to the second identification information, the processor causes the first storage area and the second storage area to share learning information stored in each of the first storage area and the second storage area.

The present invention allows for management of learning information with an assumption that a user may also change schools.

### BRIEF DESCRIPTION OF DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
Fig. 1 is a block diagram illustrating a schematic structure of an information processing system in an embodiment of the present disclosure;
Fig. 2 is a block diagram illustrating a server and a storage device;
Fig. 3A is a flowchart illustrating a moving-out process;
Fig. 3B is a flowchart illustrating a moving-in process;
Fig. 4A illustrates a student management screen;
Fig. 4B illustrates a student change screen;
Fig. 5A illustrates a school ID login screen;
Fig. 5B illustrates a private ID login screen;
Fig. 5C illustrates a linking screen;
Fig. 6A illustrates a self-learning management screen for a folder of a school ID;
Fig. 6B illustrates a self-learning management screen for a folder of a private ID;
Fig. 7A illustrates a notebook screen;
Fig. 7B illustrates a My Folder management screen;
Fig. 8A illustrates a notebook publication notification screen; and
Fig. 8B illustrates a publication history screen.

### DETAILED DESCRIPTION

Hereinafter, one or more embodiments of the present invention will be described with reference to the drawings. The scope of the invention is not limited to the disclosed embodiments.

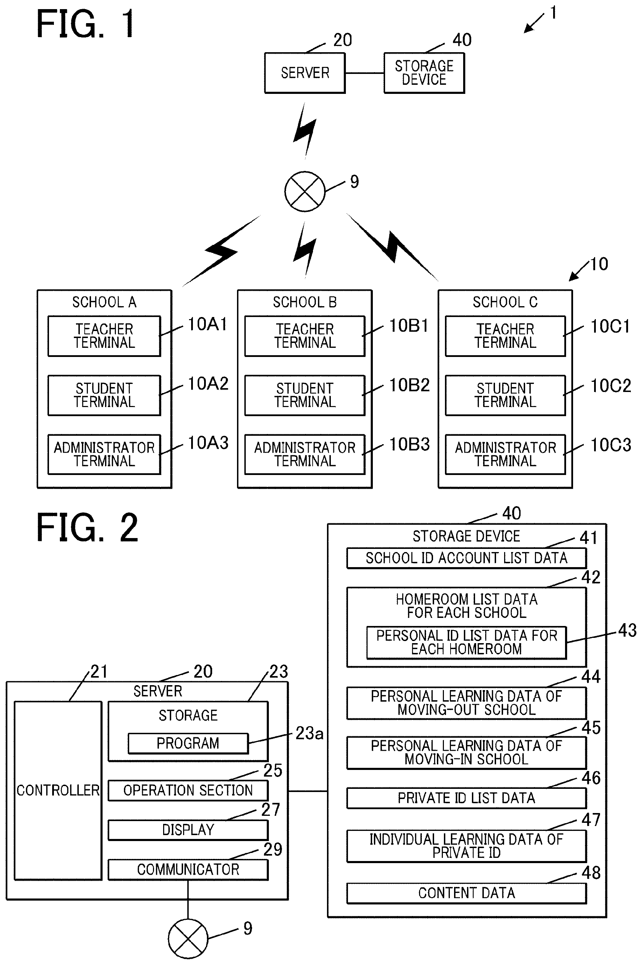

Fig. 1 is a block diagram illustrating the overall structure of a learning support system 1. The learning support system 1 includes a server 20 as an information management apparatus, a storage device 40, and a plurality of terminals 10.

The learning support system 1 is an information processing system that provides a learning support service and a general management service. The learning support service provides support for creating and managing learning information in class or at home to registrants (a teacher and a student) of a plurality of schools as educational institutions. The general management service is provided separately from the learning support service by a company that operates the learning support service. The general management service provides general management for various products and services. The learning support system 1 includes a server 20, a storage device 40, and a plurality of terminals 10. The terminal 10 is a desktop personal computer (PC), laptop PC, tablet PC, smartphone, cell phone, or the like. The terminal 10 includes an operation part such as a touch screen, a mouse, a touch pad, a stylus, a pointing device, a keyboard, a key, and a push button. The terminal 10 recognizes and obtains input information in response to a user operation (gesture) made to an input device. The terminal 10 includes a display such as a liquid crystal display or an organic electro-luminescence (EL) display. The terminal 10 can function as a display device that displays various types of information on the display.

The terminal 10 includes a communication device such as a cell phone line communication module, a network card, or a wireless LAN adapter. The terminal 10 is connected by the communication device to an information communication network 9 such as the Internet. The terminal 10 can access the server 20 through the network 9. A secure communication protocol such as a virtual private network (VPN), for example, may be adopted for the communication between the terminal 10 and the server 20.

The terminal 10 has an operating system (OS) installed therein, as well as application programs that can be executed on the OS. The application programs may be capable of running on a web browser. The terminal 10 accesses the server 20, receives information from the server 20, and displays the received information on the display by way of an application program.

The server 20 is a server host machine configured by a computer system. The server 20 may be comprised of a single computer system or a plurality of computer systems capable of distributed or parallel processing. The server 20 may be a cloud computing system.

The storage device 40 is a semiconductor storage device, a magnetic storage device, a network attached storage (NAS), a data server, a file server, or a cloud computing system. The server 20 writes information in the storage device 40, and reads information written in the storage device 40.

The learning support system 1 is used by a plurality of schools. In the example shown in Fig. 1, the number of schools using the learning support system 1 is three (School A, School B, and School C), but it can be two, or four or more. Each school has at least one teacher, at least one student, and at least one school administrator, who are registered with the learning support system 1 as registrants. A teacher may also serve as a school administrator. The terminal 10 for a teacher at School A is designated as a terminal 10A1, the terminal 10 for a student at School A as a terminal 10A2, and the terminal 10 for a school administrator at School A as a terminal 10A3. Similarly, the terminal 10 for a teacher at School B is designated as a terminal 10B1, the terminal 10 for a student at School B as a terminal 10B2, and the terminal 10 for a school administrator at School B as a terminal 10B3. The terminal 10 for a teacher at School C is designated as a terminal 10C1, the terminal 10 for a student at School C as a terminal 10C2, and the terminal 10 for a school administrator at School C as a terminal 10C3.

The teacher as a registrant accesses the server 20 using his/her own terminal 10, and the student as a registrant accesses the server 20 using his/her own terminal 10 in class, for instance. By using the learning support system, the teacher can share information with the student through a class lesson, communicate with the student, and share various tools and various content data installed on the server 20 with the student. The various tools include tools such as a calculator, a scientific calculator, a graphing tool, a drawing tool, a dictionary, and/or a notebook. The various content data are, for example, a digital textbook, various dictionary data, and/or a course material video. The notebook as learning information is a notebook-like display area where various sticky notes as learning information can be placed at an arbitrary position. Data of the notebook is defined as notebook data. A sticky note is an electronic sticky note that serves as a display object that includes information that the user wants to write down. Data of the sticky note is defined as sticky note data. Students can share information and communicate with each other through the learning support system in class, for instance, and can share various tools and contents installed on the server 20.

The school administrator as a registrant accesses the server 20 using his/her terminal 10 and is responsible for various management tasks. The management tasks for the school administrator include the following:
(1) Editing a school profile
(2) Registering, deleting and modifying a school identification (ID) account for a teacher;
(3) Registering, deleting and modifying a school ID account for a student;
(4) Registering, deleting and modifying a homeroom;
(5) Associating and canceling the association of a personal ID account for a teacher to a homeroom;
(6) Associating and canceling the association of a school ID account for a student to a homeroom;
(7) Registering, deleting and modifying a class;
(8) Associating and canceling the association of a school ID account for a teacher to a class; and
(9) Associating and canceling the association of a personal ID account for a student to a class.

Particularly, when a student changes schools, (3) and (6) include deleting a school ID account for the student moving out of a school and registering a school ID account for the student moving into a new school. It is also assumed that in addition to the school administrator, each school has a system administrator for an information processing system within the school. The terminals 10A1, 10B1, and 10C1 can be operated by the system administrator upon application from the school administrator of each school.

In order to receive the learning support service from the server 20, a registrant must log in using a school ID and a personal ID. The school ID is issued to each school, and the personal ID to the individual (teacher, student, or administrator) belonging to each school (school ID). A school ID + a personal ID is defined as a school ID account. An ID for the above general management service issued to each registrant, which is necessary to receive the general management service, is defined as a private ID. In this embodiment, it is assumed that the server 20 manages both the learning support service and the general management service, where the above (1) through (9) are provided by the learning support service and a private ID is needed for the general management service. A school ID account and a private ID (account) are two separate IDs, and the same individual (registrant) can have a school ID account and a private ID.

The server 20 is then described in detail with reference to Fig. 2. Fig. 2 is a block diagram illustrating the server 20 and the storage device 40. The server 20 includes a controller (processor) 21, a storage 23, an operation section 25, a display 27, and a communicator 29.

The controller 21 is responsible for the overall control of the server 20. The controller 21 includes a central processing unit (CPU) as a hardware processor, a random access memory (RAM), a graphics processing unit (GPU), a main board, and the like. The CPU performs various kinds of arithmetic processing. The RAM provides the CPU with a storage and a work area for the arithmetic processing. The GPU performs an operation that can be performed faster than the CPU (e.g., image processing and matrix arithmetic processing) under instructions from the CPU. The main board includes a bus, a bus controller, an interface circuit, and the like. The main board also transmits information among the CPU, RAM, GPU, storage 23, operation section 25, display 27 and communicator 29.

The operation section 25 has an input device such as a touch panel, a mouse, a touch pad, a stylus, a pointing device, a keyboard, a key, and a push button. The operation section 25 outputs a corresponding signal to the main board of the controller 21 in response to a gesture made by the administrator of the server 20 to the operation section 25. A gesture is also referred to as an operation. The display 27 includes a display such as an LCD or an organic EL display. The display 27 displays an image according to an image signal input from the main board of the controller 21. The communicator 29 includes a network card or a wireless LAN adapter. The communicator 29 is connected to the network 9 via a router or other means.

The storage 23 is a memory device such as a hard disk drive (HDD) and/or a solid state drive (SSD). An operating system (OS) is stored in the storage 23 and installed on the server 20 so that the OS is executed by the controller 21. The storage 23 includes a program 23a that can be executed by the controller 21 on the OS. Particularly, the program 23a includes a moving-out program for executing a moving-out process and a moving-in program for executing a moving-in process. The moving-out process and moving-in process will be described below later.

The storage device 40 stores various data used by the controller 21 to execute the program 23a. The data stored in the storage device 40 is described in detail below. The storage device 40 stores school ID account list data 41 for each school, homeroom list data 42 for each school, personal learning data 44 of a school of which a student moves out (moving-out school), personal learning data 45 of a school to which the student moves in (moving-in school), private ID list data 46, learning data 47 of an individual with a private ID, and content data 48.

The school ID account list data 41 is prepared for each school to be managed, and information on each registrant belonging to the same school (school registrant) is associated with a common school ID. The school ID account list data 41 is a list including the personal ID, authority information, name information, student ID number, and status for each school registrant of each school ID. The school ID is a unique identification information assigned to the school. The school ID is, for example, a school identification number including the education level (e.g., elementary, or middle), state, school type (public or private), school number, and inspection number. The inspection number is a number to prevent an input error in other numbers of the school ID. The personal ID is unique identification information assigned to the school registrant. The personal ID includes a number, a letter, a symbol, and/or the like. The authority information represents the authority (school administrator, teacher, or student) given to the school registrant. The name information represents the name of the school registrant. The student ID number is the student ID number of the school registrant. The status is the status of the school registrant (e.g., current student = active; transfer student = moved out; or former student = graduated).

Separately from the school ID account list data 41, the storage device 40 stores verification data in encrypted form in which the authentic school ID and the personal ID are associated with a password for each school registrant. Each school registrant can log in using his/her school ID and personal ID and password, with an authentication method using another type of authentication factor as necessary.

The homeroom list data 42 for each school is a list including grade information and group information for each homeroom. The grade information indicates a grade to which the homeroom belongs. The group information indicates a group into which the homeroom is incorporated in the grade. The homeroom list data 42 is prepared for each school. The grade information and the group information for each homeroom is associated with a common school ID.

The homeroom list data 42 includes personal ID list data 43 for each homeroom. The personal ID list data 43 is a list including the personal ID and role information of each school registrant. The role information indicates a role (e.g., homeroom teacher, assistant homeroom teacher, or student) that each school registrant is assigned within the homeroom. The personal ID list data 43 is prepared for each homeroom. The personal ID and the role information of each school registrant are associated with the school ID and homeroom information (the grade information and the group information).

The personal learning data 44 of the moving-out school includes learning information (learning data) and license data of the individual (school registrant) at the moving-out school. The learning data and the license data are associated with the school ID and the personal ID. The learning data includes self-learning data and class data, more specifically, notebook data and sticky note data created through self-learning and class lessons. A folder in which the learning data is stored includes a folder such as a class lesson folder of the homeroom in which the notebook data is stored, and a folder such as My Folder in which the sticky note data is stored. The license data is configuration data for whether the individual at the moving-out school is licensed to use the content data 48. The license data includes content data usage of the sticky note data linked to the content data 48. In the personal learning data 44, the learning data and the license data are managed using a flag such as current student (status: active) or transfer student (status: moved out). In the case of a transfer student flag, the learning data will be deleted 180 days after the flag is raised. However, such deletion does not delete the learning data substantially, but rather renders the learning data unavailable for viewing or access.

The personal learning data 45 of the moving-in school includes learning information (learning data) and license data of the individual (school registrant) at the moving-in school. The learning data and the license data are associated with the school ID and the personal ID. The personal learning data 45 is automatically generated in a changing-schools procedure. However, data is not stored at the time of the generation of the personal learning data 45, and the learning data is transferred/copied from the personal learning data 47 of the individual with the private ID. The personal learning data 44 and 45 may be configured to store learning data and license data associated with the school ID and the personal ID of each school, without distinction between a moving-out school and a moving-in school.

The private ID list data 46 is a list that includes the private ID assigned to each registrant (private registrant) of the general management service. Separately from the private ID list data 46, the storage device 40 stores verification data in encrypted form in which the authentic private ID is associated with a password for each private registrant.

The learning data 47 of an individual with a private ID (private registrant) includes learning data (learning data from self-learning) created by the individual associated with the private ID and license data. Here, the individual associated with the private ID is, for example, the same person as the school registrant (student) associated with the school ID and personal ID, whether or not the individual changes schools.

The content data 48 is data of an electronic book such as a textbook and a reference book and/or content such as an electric dictionary provided to a school registrant and a private registrant. To use the content data 48, a purchased license is required for each content. For example, if a school administrator purchases a license for the content data 48 for a plurality of students in bulk from the above-mentioned operating company and grants the license to each student, license data indicating that each student is licensed is stored in the learning data 44 of each of the plurality of students. When a private registrant purchases a license from the operating company for self-learning, license data indicating that the private registrant is licensed is stored in the learning data 47 of the private registrant.

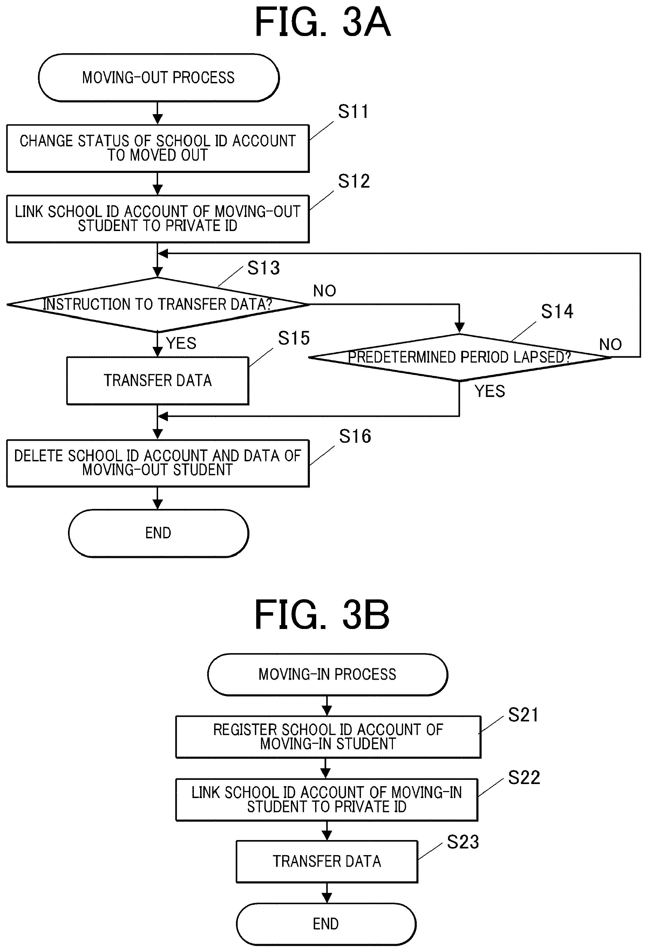

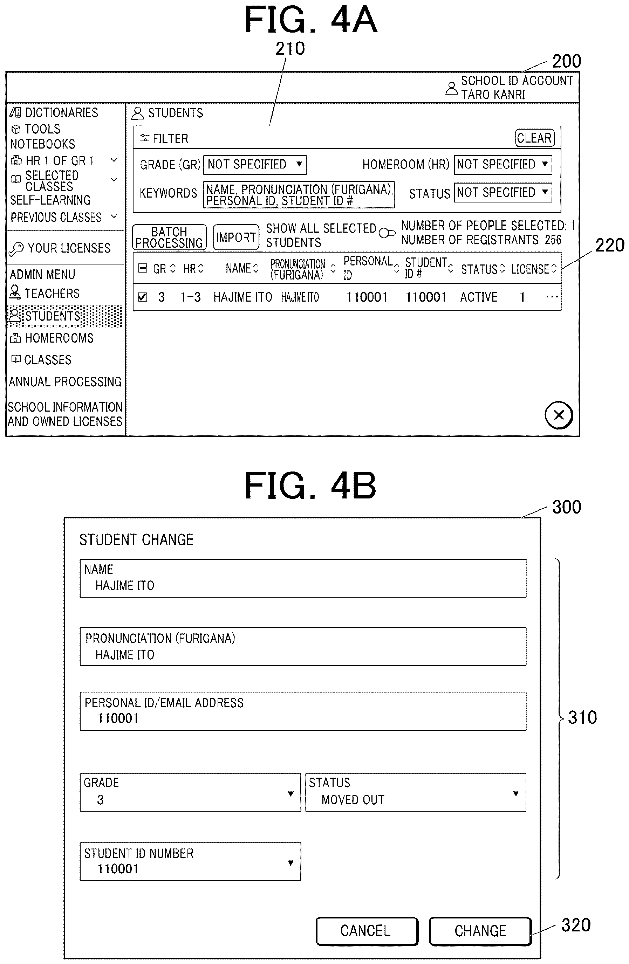

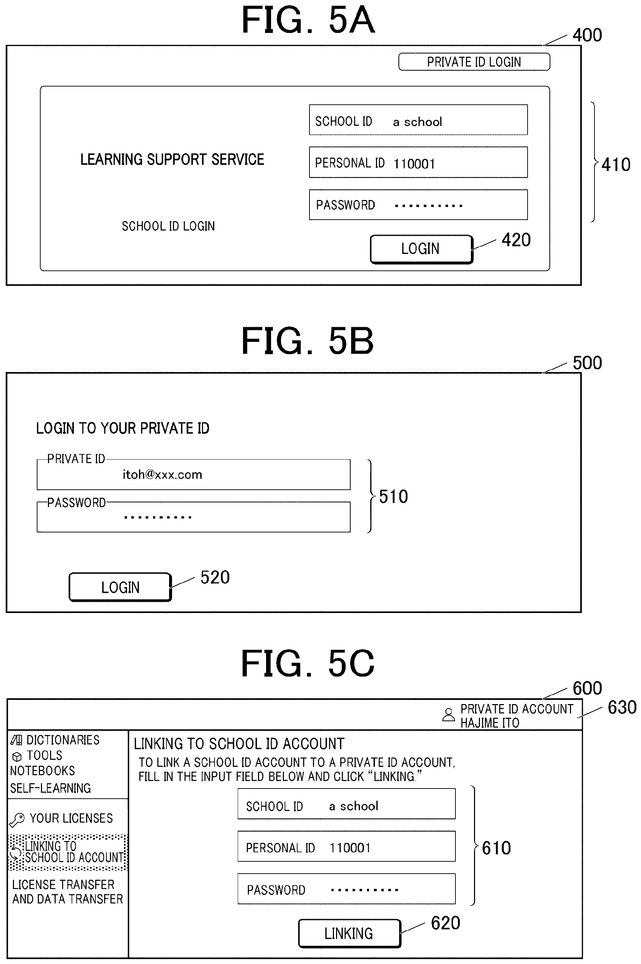

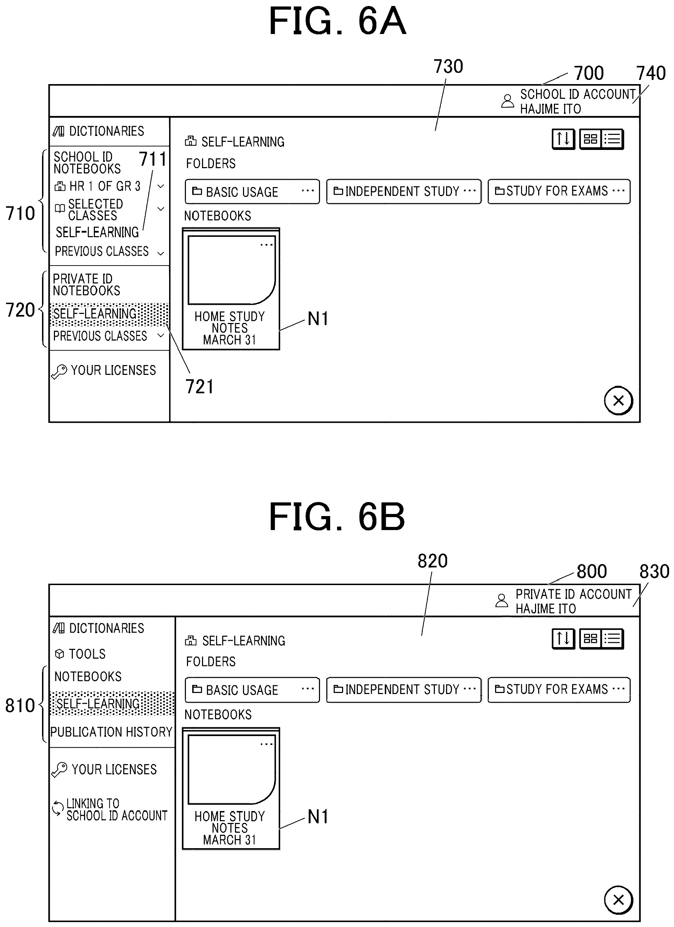

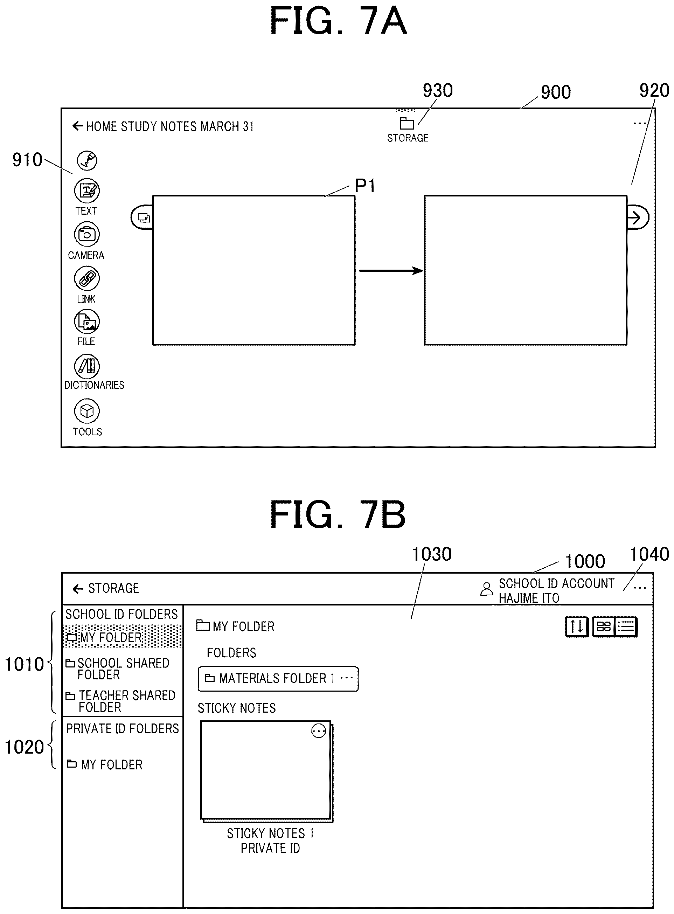

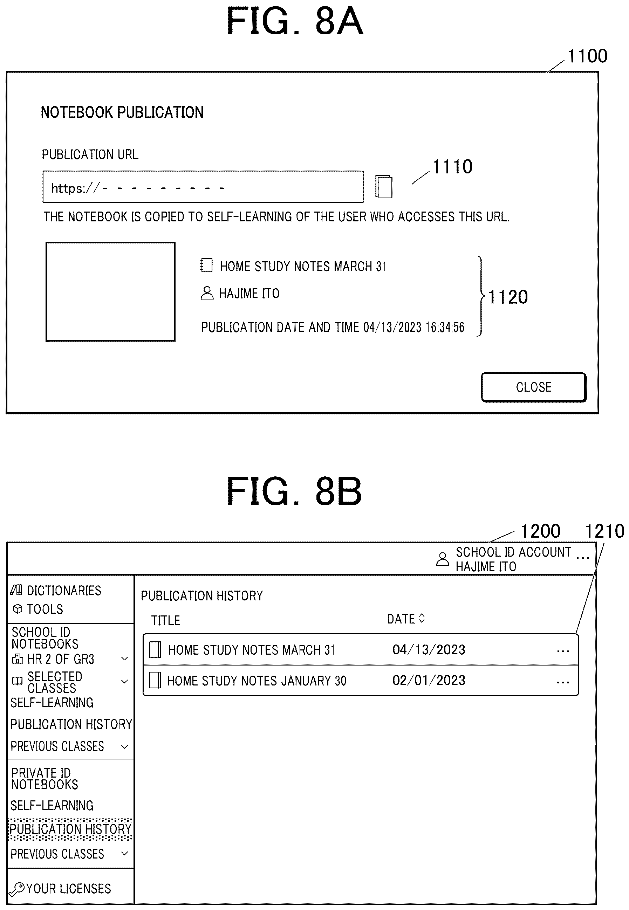

Next, an operation of the learning support system 1 is explained with reference to Figs. 3A through 8B. Fig. 3A is a flowchart illustrating a moving-out process; Fig. 3B is a flowchart illustrating a moving-in process; Fig. 4A illustrates a student management screen 200. Fig. 4B illustrates a student change screen 300. Fig. 5A illustrates a school ID login screen 400. Fig. 5B illustrates a private ID login screen 500. Fig. 5C illustrates a linking screen 600. Fig. 6A illustrates a self-learning management screen 700 for a folder of a school ID. Fig. 6B illustrates a self-learning management screen 800 for a folder of a private ID. Fig. 7A illustrates a notebook screen 900. Fig. 7B illustrates a My Folder management screen 1000. Fig. 8A illustrates a notebook publication notification screen 1100. Fig. 8B illustrates a publication history screen 1200.

The moving-out process and the moving-in process performed by the server 20 for a student changing schools are described below. Described here is an example of a student "Hajime Ito" in Homeroom 1 of Grade 3 of School A, moving into Homeroom 2 of Grade 3 of School B. It is assumed that the student "Hajime Ito" is currently enrolled in School A, has been given a school ID and a personal ID, and has also been given a private ID through new registration for the general management service. The controller 21 of the server 20 receives from the terminal 10 operation information corresponding to an operation input from a user on the terminal 10. The controller 21 of the server 20 generates and transmits display information to the terminal 10 for display. These operations shall be expressed as follows: the controller 21 accepts a user input of operation information via the terminal 10, and the controller 21 displays display information on the terminal 10.

First, the moving-out process executed by the server 20 is described with reference to Fig. 3A. For example, assume that a school administrator of School A (Taro Kanri) has applied to a system administrator of School A to execute the moving-out process. It is assumed that the system administrator of School A has been informed of information necessary for the moving-out process from the school administrator of School A and the moving-out student. The information necessary for the moving-out process is the school ID, personal ID, and password of the school administrator of School A, and the school ID, personal ID, and password, and the private ID and its password of the moving-out student. In the server 20, for example, when the system administrator of School A inputs an instruction to execute the moving-out process via the operation part of the terminal 10A3, the controller 21 executes the moving-out process in accordance with the moving-out program.

The controller 21 changes the status of the moving-out student from "active" (meaning enrolled) to "moved out" in response to an operation input from the system administrator via the operation part of the terminal 10A3 (step S11). In step S11, for example, the controller 21 receives a request to display a login screen for the learning support service from the system administrator via the operation part of the terminal 10A3. The controller 21 then displays a school ID login screen on the display of the terminal 10A3. The controller 21 accepts input of the school ID, personal ID, and password of the school administrator of School A from the system administrator via the operation part of the terminal 10A3. The controller 21 authenticates the system administrator as the school administrator for login using the school ID account list data 41. After the login authentication, the controller 21 displays the student management screen 200 illustrated in Fig. 4A on the display of the terminal 10A3 in response to an operation input from the system administrator via the operation part of the terminal 10A3.

The student management screen 200 includes a condition input area 210 and a student information display area 220. The condition input area 210 is a field for entering a condition (grade, keyword, homeroom, and status) to search for a student to be moved out. The student information display area 220 displays the information (grade, name, homeroom, pronunciation [furigana], personal ID, student ID number, and status) on the student retrieved by the search. The controller 21 accepts a selection of the moving-out student among the retrieved student(s) from the system administrator via the operation part of the terminal 10A3. The controller 21 then displays the student change screen 300 illustrated in Fig. 4B on the display of the terminal 10A3. The student change screen 300 includes an information display area 310, a change button 320, and the like. The information display area 310 displays information about the selected student and accepts input for change. The change button 320 accepts a click to execute a change in the information display area 310. The controller 21 changes the transfer student status in the school ID account list data 41 and learning data 44 of the selected student to "moved out" in response to the input on the information display area 310 and the change button 320. The system administrator then logs out once.

The controller 21 links the school ID account of the moving-out student to the private ID based on an operation input from the system administrator via the operation part of the terminal 10A3 (step S12). In step S12, for example, the controller 21 receives a request to display a login screen for the learning support service from the system administrator via the operation part of the terminal 10A3. The controller 21 then displays the school ID login screen 400 illustrated in Fig. 5A on the display of the terminal 10A2. The school ID login screen 400 includes an information input area 410 and a login button 420. The information input area 410 accepts input of a school ID, a personal ID, and a password. The login button 420 accepts a click to execute login. The controller 21 accepts input of the school ID, personal ID, and password of the moving-out student (Hajime Ito) of School A from the system administrator via the operation part of the terminal 10A2. The controller 21 authenticates the system administrator as the moving-out student for login using the school ID account list data 41. After the login authentication, the controller 21 displays the login screen 500 illustrated in Fig. 5B on the display of the terminal 10A3 in response to an operation input from the system administrator via the operation part of the terminal 10A2 requesting to display a login screen for the general management service. Here, the user remains logged in to the learning support service.

The login screen 500 includes an information input area 510 and a login button 520. The information input area 510 accepts input of a private ID and a password. The login button 520 accepts a click to execute login. The controller 21 accepts input of the private ID and password of the moving-out student from the system administrator via the operation part of the terminal 10A2. The controller 21 authenticates the system administrator as the moving-out student for login using the private ID list data 46. After the login authentication, the controller 21 displays the linking screen 600 illustrated in Fig. 5C on the display of the terminal 10A2. The linking screen 600 includes an information display area 610, a linking button 620, and a private ID display field 630. The information display area 610 displays the school ID, personal ID, and password of the moving-out student to be linked to the currently logged-in private ID and accepts input for change. The linking button 620 accepts a click to execute linking. The private ID display field 630 is a display area for the login name (name) of the private ID of the moving-out student. The system administrator inputs a change in the information display area 610 via the operation part of the terminal 10A3 when necessary. The controller 21 then executes linking upon input of the linking button 620 from the system administrator via the operation part of the terminal 10A3. The current date is used as the linking process date. The controller 21 moves the license data pertaining to the moving-out student from the learning data 44 to the learning data 47. At this point, the sticky note data of the learning data 44 that is linked to the content data 48 through the license data becomes unviewable with regard to data using the content data.

The system administrator may continue to log in to the learning support service and the general management service as the moving-out student or may once log out and then log back in at any time to resume.

The controller 21 determines whether there is an instruction from the system administrator via the operation part of the terminal 10A3 to start data transfer (step S13). If there is no instruction to start data transfer (step S13; NO), the controller 21 determines whether a predetermined period (e.g., 180 days) has elapsed from the linking process date (step S14). If the predetermined period has not elapsed (step S14; NO), the process moves to step S13. If there is an instruction to start data transfer (step S13; YES), the controller 21 transfers data stored in a folder of the school ID account of the moving-out student to a folder of the private ID of the moving-out student based on an operation input from the system administrator via the operation part of the terminal 10A3 (step S15).

In step S15, an example is described in which notebook data stored in a self-learning folder of the school ID account of the moving-out student is transferred to a self-learning folder of the private ID of the moving-out student. The controller 21 displays the self-learning management screen 700 illustrated in Fig. 6A on the display of the terminal 10A2 in response to an operation input from the system administrator via the control part of the terminal 10A3. The self-learning management screen 700 includes a school ID menu 710, a private ID menu 720, a data display area 730, and a school ID account display field 740. The school ID menu 710 is a menu for selecting a class lesson folder, a self-learning folder, or the like corresponding to the school ID account currently logged in. The school ID menu 710 includes a self-learning study button 711 for the school ID account. The private ID menu 720 is a menu for selecting a self-learning folder or the like corresponding to the private ID account currently logged in. The private ID menu 720 includes a self-learning button 721 for the private ID account. The data display area 730 is a display area for a list of folders and notebook data stored in the folder selected in the school ID menu 710 or the private ID menu 720. Here, it is assumed that on the self-learning management screen 700, the self-learning button 711 has been clicked, and a folder and a notebook N1 in the self-learning folder are displayed in the data display area 730. The school ID account display field 740 is a display area for the login name (name) of the school ID account of the moving-out student.

When the notebook N1 is selected via the operation part of the terminal 10A3 and a predetermined operation input (e.g., right-click) is performed, the controller 21 displays a list of candidate operations (move, copy, and the like) for the notebook N1 on the display. When a move is selected via the operation part of the terminal 10A3, the controller 21 displays a list of candidate movement destinations of the selected operation and accepts a selection for the movement destination. When the self-learning folder of the private ID is input as the movement destination of the notebook N1, the controller 21 updates the learning data 44 and the learning data 47 to change a storage location of notebook data of the notebook N1 in the learning data 44 from the self-learning folder of the school ID account to the self-learning folder of the private ID account. When an instruction to switch the accounts is input in the school ID account display field 740, the controller 21 displays the self-learning management screen 800 illustrated in Fig. 6B on the display of the terminal 10A3. The self-learning management screen 800 includes a private ID menu 810, a data display area 820, and a private ID account display field 830. The private ID menu 810 is similar to the private ID menu 720. The data display area 820 is a display area for a list of folders and notebook data stored in the selected self-learning folder of the private ID, which includes the notebook N1. The private ID account display field 830 is a display area for the login name (name) of the private ID of the moving-out student. In this way, the notebook data of the moving-out student is transferred from the learning data 44 to the learning data 47. Sticky note data stored in a folder for sticky note data such as My Folder of the school ID account of the moving-out student can also be transferred to My Folder of the private ID of the moving-out student. In step S15, these processes are repeated and all of the desired notebook data and sticky note data of the school ID account of the moving-out student are transferred to a folder of the private ID of the moving-out student.

The controller 21 then deletes the school ID account (the school ID and personal ID) of the moving-out school of the moving-out student from the school ID account list data 41 and the personal ID list data 43, deletes the learning data of the moving-out student from the learning data 44 (step S16), and the moving-out process ends. In step S16, the controller 21 also releases the link between the school ID account and the private ID established in step S12. The deletion in step S16 does not delete data substantially, for example, but rather renders the data unavailable for viewing or access. If the predetermined period has elapsed (step S14; YES), the process moves to step S16.

Next, the moving-in process executed by the server 20 is described with reference to Fig. 3B. For example, assume that a school administrator of School B has applied to a system administrator of School B to execute the moving-in process. It is assumed that the system administrator of School B has been informed of information necessary for the moving-in process from the school administrator of School B and the moving-in student. The information necessary for the moving-in process is: the school ID, personal ID, and password of the school administrator of School B; and the school ID, personal ID, and password, and the private ID and its password of the moving-in student (Hajime Ito). In the server 20, for example, when the system administrator of School B, the moving-in school, inputs an instruction to execute the moving-in process via the operation part of the terminal 10B3, the controller 21 executes the moving-in process in accordance with the moving-in program.

The controller 21 registers a school ID account of School B for the moving-in student and changes the status to active based on an operation input from the system administrator of School B via the operation part of the terminal 10B3 (step S21). In step S21, the controller 21 accepts input of the school ID, personal ID, and password of the school administrator of School B on a login screen from the system administrator via the operation part of the terminal 10B3. The controller 21 authenticates the system administrator as the school administrator for login using the school ID account list data 41. After the login authentication, the controller 21 accepts input of the personal ID, authority information (student), name information (Hajime Ito), student ID number, status (active), and (initial) password of the moving-in student from the system administrator via the operation part of the terminal 10B3. The controller 21 stores the school ID of School B and the input information such as the personal ID in the school ID account list data 41 for registration. Similarly, the controller 21 accepts input from the system administrator the personal ID, homeroom information, and role information of the moving-in student, and adds the school ID of School B and the input information such as the personal ID to the personal ID list data 43. The system administrator of School B logs out once as the school administrator.

The controller 21 links the school ID account of the moving-in student to the private ID based on an operation input from the system administrator via the operation part of the terminal 10B3 (step S22). In step S22, for example, the controller 21 receives a request to display a login screen for the learning support service from the system administrator via the operation part of the terminal 10B3. The controller 21 then displays the login screen 400 on the display of the terminal 10B3. The controller 21 accepts input of the school ID, personal ID, and password of the moving-in student into the information input area 410 and authenticates the system administrator as the moving-in student for login using the school ID account list data 41. After the login authentication, the controller 21 displays the login screen 500 on the display of the terminal 10B3 in response to an operation input from the system administrator via the operation part of the terminal 10B3 requesting to display a login screen for the general management service. Here, the system administrator remains logged in to the learning support service.

The controller 21 accepts input of the private ID and password of the moving-in student from the system administrator via the operation part of the terminal 10B3. The controller 21 authenticates the system administrator as the moving-in student for login using the private ID list data 46. After the login authentication, the controller 21 displays the linking screen 600 on the display of the terminal 10B3. The information display area 610 displays the school ID, personal ID, and password of School B of the moving-in student and accepts input for change. The system administrator inputs a change in the information display area 610 via the operation part of the terminal 10B3 when necessary. The controller 21 then executes linking upon input of the linking button 620 from the system administrator via the operation part of the terminal 10B3. The controller 21 moves the license data of the moving-in student from the learning data 47 to the learning data 45. The license data becomes effective for content data usage of sticky note data of the learning data 45 linked to the content data 48. The controller 21 renders the content data 48 licensed to the moving-in student available for use when creating or editing learning information to be stored in the learning data 45. The system administrator may continue to be logged in to the learning support service and the general management service or may once log out and then log back in at any time to resume.

The controller 21 transfers data stored in a folder of the private ID of the moving-in student to a folder of the school ID account of the moving-in school based on an operation input from the system administrator via the operation part of the terminal 10B3 (step S23), and the moving-in process ends. In step S23, an example is described in which sticky note data of notebook data stored in a self-learning folder of the private account of the moving-in student is transferred to My Folder of the school ID account of the moving-in school (School B). The controller 21 displays the self-learning management screen 800 on the display of the terminal 10B3 in response to an operation input from the system administrator via the operation part of the terminal 10B3. Here, it is assumed that the notebook N1 has been clicked on the self-learning management screen 800.

The controller 21 displays the notebook screen 900 corresponding to the notebook N1 illustrated in Fig. 7A on the display of the terminal 10B3. The notebook screen 900 includes various sticky note buttons 910, a sticky note display area 920, and a storage icon 930. The various sticky note buttons 910 are buttons for creating various sticky note data. The sticky note display area 920 is an area for displaying sticky note data on the notebook. It is assumed that the sticky note display area 920 has sticky note data P1. The storage icon 930 is an icon for saving (storing) sticky note data in the sticky note display area 920 into My Folder, a school shared folder or a teacher shared folder for saving sticky note data. My Folder is a folder dedicated to each registrant. The school shared folder is a folder shared by school registrants of the same school. The teacher shared folder is a folder shard by teachers of the same school. When an input to superimpose the sticky note data P1 on the storage icon 930 is received from the system administrator via the operation part of the terminal 10B3, the controller 21 displays the My Folder management screen 1000 illustrated in Fig. 7B on the display of the terminal 10B3.

The My Folder management screen 1000 includes a school ID menu 1010, a private ID menu 1020, a data display area 1030, and a school ID account display field 1040. The school ID menu 1010 is a menu for selecting My Folder, a school shared folder, a teacher shared folder, or the like corresponding to the school ID account currently logged in. The private ID menu 1020 is a menu for selecting My Folder corresponding to the private ID account currently logged in. The data display area 1030 is a display area for a list of folders and sticky note data stored in the folder selected in the school ID menu 1010 or the private ID menu 1020. The school ID account display field 1040 is a display area for the login name (name) of the school ID of the moving-in student. For example, when My Folder is selected as a storage location for the sticky note data P1 stored in the storage icon 930, the sticky note data P1 is stored in My Folder of the school ID of School B. When a move to My Folder of the school ID is specified as the storage location for the sticky note data P1, the controller 21 updates the learning data 47 and the learning data 45 by changing the storage location for the sticky note data P1 in the learning data 47 from My Folder of the private ID to My Folder of the School ID account. In this way, the sticky note data of the moving-in student is transferred from the learning data 47 to the learning data 45. The notebook data stored in the self-learning folder of the private ID of the moving-in student can also be transferred to a folder for notebook data, such as a self-learning folder of the school ID account of the moving-in student. In step S23, these processes are repeated and all of the desired notebook data and sticky note data of the private ID of the moving-in student are transferred to a folder of the school ID account of the moving-in student.

Learning data of the moving-out school can also be transferred to a folder of the moving-in school without linking the school ID account to the private ID. For example, when a predetermined operation input (e.g., right-click) is performed on the notebook N1 by the system administrator via the operation part, the controller 21 displays a list of candidate operations for the notebook N1 on the display. Here, the terminal 10A3 of the system administrator of School A is displaying the self-learning management screen 700. When publication is selected by the system administrator via the operation part of the terminal 10A3, the controller 21 publishes notebook data of the notebook N1 to a specified uniform resource locator (URL) and displays the notebook publication notification screen 1100 illustrated in Fig. 8A on the display. The notebook publication notification screen 1100 includes a publication URL display field 1110 and a notebook information display field 1120. The publication URL display field 1110 is a display area for the URL to which the notebook data is published. The notebook information display field 1120 is a display area for a thumbnail and text information of the published notebook data. The text information is the name of the notebook data, the name of the moving-out student who created the notebook data, and the date and time of the publication. The publication URL allows downloading the notebook data of the notebook N1. The system administrator of School A downloads the notebook data of the notebook N1 to the terminal 10A3. After the student moves into School B, the system administrator of School A manually uploads the notebook data in the terminal 10A3 to a folder (learning data 45) for the terminal 10B2 in the server 20.

After notebook data, such as a notebook N, has been published, the controller 21 displays the publication history screen 1200 illustrated in Fig. 8B on the display in response to an operation input from the moving-out student via the operation part of the terminal 10A3 of the system administrator requesting to display a publication history. The publication history screen 1200 includes a publication history display area 1210. The publication history display area 1210 is an area for displaying history information such as the name of published notebook data and the date and time of the publication. Similarly to notebook data, sticky note data can also be made publicly available.

As described above, according to the present embodiment, the server 20 includes the controller 21 that links the school ID account (the school ID and the personal ID) as a first identification information to the private ID as a second identification information, the first identification information being set corresponding to a student as a user enrolled in School B as a specific educational institution and associated with the learning data 45 as a first storage area for storing learning information, the second identification information being set corresponding to the student and associated with the learning data 47 storing learning information of the student in a past and the content data 48 owned by the student. Here, when linking the school ID account to the private ID, the controller 21 causes the learning data 45 and 47 to share learning information stored in each of the learning data 45 and 47. Therefore, even if a student changes schools, learning information before changing the schools can be easily shared. Thus, the interaction process between a student as a user and the server 20 can reliably assist the user in performing a technical task, the task to manage learning data when the student moves into a specific school and when the student moves out of his/her former school.

In addition, the controller 21 renders the content data 48 owned by the student available for use when the student logs in with his/her school ID and personal ID of School B. This allows the student to properly use the content data 48 to which the student has got licensed before changing schools.

Further, the learning information stored in the learning data 47 includes learning information of the student when he/she was enrolled in School A as an educational institution in the past. This allows the student to easily use in the moving-in school the learning information obtained in School A, the moving-out school.

The controller 21 also renders the content data 48 owned by the student available for use when learning information to be stored in the learning data 45 is created or edited. This allows the student to use the content data 48 to which the student has got licensed at the moving-out school when creating or editing learning information at the moving-in school.

In the above description, an example has been disclosed in which the storage 23 comprising an HDD and/or an SSD is used as a computer-readable medium storing the program pertaining to the present disclosure. This is not intended to limit the present invention. The computer-readable medium may be another nonvolatile memory or a portable storage medium such as a CD-ROM. Further, as a medium to provide data of the program pertaining to the present disclosure via a communication line, a carrier wave can be used.

The above embodiment describes an example of an information management apparatus, an information management method, and a program pertaining to the present disclosure. This is not intended to limit the present invention.

The above embodiment describes a moving-out process and a moving-in process for moving learning information and license data when a student change schools. This is not intended to limit the present invention. For example, a moving-out process and a moving-in process may be applied to move learning information and license data of a teacher. In this case, the learning information of the teacher is information for student learning. In the above embodiment, the license data of the content data 48 granted at the moving-out school is automatically moved to the learning data 45 of the school ID account of the moving-in school via a link with the private ID. This is not intended to limit the present invention. For example, among the license data of the content data 48 granted at the moving-out school, only the license data for which the school administrator has set permission to move may be moved to the learning data 45 of the school ID account of the moving-in school via a link with the private ID.

Although embodiments of the present invention have been described and illustrated in detail, the disclosed embodiments are made for purposes of illustration and example only and not limitation. The scope of the present invention should be interpreted by terms of the appended claims and their legal equivalents. The entire disclosure of Japanese Patent Application No. 2023-106610 filed on June 29, 2023, is incorporated herein by reference in its entirety.

## Claims

1. An information management apparatus, comprising:
a processor that links first identification information to second identification information, the first identification information being set corresponding to a user enrolled in a specific educational institution and associated with a first storage area for storing learning information, the second identification information being set corresponding to the user and associated with a second storage area storing learning information of the user in a past and content owned by the user,
wherein in a case where the processor links the first identification information to the second identification information, the processor causes the first storage area and the second storage area to share learning information stored in each of the first storage area and the second storage area.

2. The information management apparatus according to claim 1, wherein the processor renders the content owned by the user available for use in a case where the user logs in with the first identification information.

3. The information management apparatus according to claim 1, wherein the learning information stored in the second storage area includes learning information of the user in a case where the user was enrolled in a previous educational institution in the past.

4. The information management apparatus according to any one of claims 1 to 3, wherein the processor renders the content owned by the user available for use in a case where learning information to be stored in the first storage area is created or edited.

5. An information management method performed by a processor of an information management apparatus, comprising:
linking first identification information to second identification information, the first identification information being set corresponding to a user enrolled in a specific educational institution and associated with a first storage area for storing learning information, the second identification information being set corresponding to the user and associated with a second storage area storing learning information of the user in a past and content owned by the user; and
causing the first storage area and the second storage area to share learning information stored in each of the first storage area and the second storage area in a case where the processor links the first identification information to the second identification information.

6. The information management method according to claim 5, further comprising: rendering the content owned by the user available for use in a case where the user logs in with the first identification information.

7. The information management method according to claim 5, wherein the learning information stored in the second storage area includes learning information of the user in a case where the user was enrolled in a previous educational institution in the past.

8. The information management method according to any one of claims 5 to 7, further comprising: rendering the content owned by the user available for use in a case where learning information to be stored in the first storage area is created or edited.

9. A program that causes a processor of a computer to link first identification information to second identification information, the first identification information being set corresponding to a user enrolled in a specific educational institution and associated with a first storage area for storing learning information, the second identification information being set corresponding to the user and associated with a second storage area storing learning information of the user in a past and content owned by the user,
wherein in a case where the processor links the first identification information to the second identification information, the processor causes the first storage area and the second storage area to share learning information stored in each of the first storage area and the second storage area.

10. The program according to claim 9, wherein the program causes the processor to render the content owned by the user available for use in a case where the user logs in with the first identification information.

11. The program according to claim 9, wherein the learning information stored in the second storage area includes learning information of the user in a case where the user was enrolled in a previous educational institution in the past.

12. The program according to any one of claims 9 to 11, wherein the program causes the processor to render the content owned by the user available for use in a case where learning information to be stored in the first storage area is created or edited.
